(19) Europäisches Patentamt
European Patent Office
Office européen des brevets

(11) Veröffentlichungsnummer: **0 305 331**
**A2**

# (12) EUROPÄISCHE PATENTANMELDUNG

(21) Anmeldenummer: **88810560.8**

(22) Anmeldetag: **16.08.88**

(51) Int. Cl.⁴: **C 08 G 59/12**

(30) Priorität: **25.08.87 CH 3243/87**

(43) Veröffentlichungstag der Anmeldung:
**01.03.89 Patentblatt 89/09**

(84) Benannte Vertragsstaaten:
**BE CH DE ES FR GB IT LI NL SE**

(71) Anmelder: **CIBA-GEIGY AG**
**Klybeckstrasse 141**
**CH-4002 Basel (CH)**

(72) Erfinder: **Reischmann, Franz-Josef, Dr.**
**Im Lenzen 6**
**7889 Grenzach-Wyhlen (DE)**

**Bagga, Madan Mohan, Dr.**
**56, Hurrell Road**
**Cambridge CB4 3RH (GB)**

Patentansprüche für folgenden Vertragsstaat: ES.

(54) **Epoxidflexibilisatoren.**

(57) Beschrieben werden Addukte der Formel I

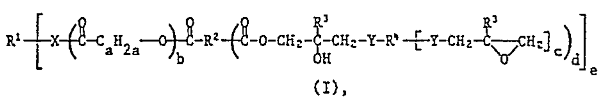

(I),

worin $R^1$ ein e-wertiger aliphatischer Rest nach dem Entfernen der funktionellen Gruppen ist, X -O- oder -NH- bedeutet, $R^2$ ein d+1 wertiger carbocyclisch-aromatischer Rest ist, $R^3$ Wasserstoff oder Methyl bedeutet, $R^4$ ein aliphatischer, aromatischer oder araliphatischer c+1-wertiger Rest ist, Y -O-, -S- oder $-NR^5-$ bedeutet, $R^5$ Wasserstoff oder

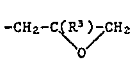

ist,
a eine ganze Zahl von 2 bis 15 bedeutet, b eine ganze Zahl von 1 bis 25 ist, c 1, 2 oder 3 ist, d 1, 2 oder 3 bedeutet und e 2, 3 oder 4 ist.

Die Addukte lassen sich zusammen mit latenten Härtern und gegebenenfalls weiteren Epoxidharzen zu Klebstoffen mit guter Lagerstabilität und hohe Flexibilität kombinieren.

EP 0 305 331 A2

**Beschreibung**

**Epoxidflexibilisatoren**

Die vorliegende Anmeldung betrifft neue Addukte ausgewählter Epoxidharze an spezielle carboxyl-terminierte Polyalkylenlactone, Gemische enthaltend besagte Addukte in Kombination mit weiteren Epoxidharzen und latenten Härtern, die Verwendung der Addukte als Flexibilisatoren für Epoxidharze und die Verwendung der härtbaren Gemische als Klebstoffe.

Es ist bekannt, Caprolacton als reaktives Lösungsmittel in Epoxidharzformulierungen zu verwenden. Ferner sind Kombinationen von Epoxidharzen mit Polyestern auf Caprolacton-Basis bekannt. Die gehärteten Produkte aus solchen Gemischen zeichnen sich im allgemeinendurch eine gute Flexibilität und ein gutes Tieftemperaturverhalten aus.

Aus der GB-A-1,565,580 sind Gemische aus carboxyl-terminierten Polycaprolactonen und Epoxidharzen bekannt. Nach der Beschreibung werden bevorzugt cycloaliphatische Epoxidharze verwendet und die Gemische sind nur begrenzt lagerstabil (bis zu zwei Tagen). Eine Adduktbildung vor der eigentlichen Härtung wird nicht beschrieben. Addukte aus carboxylterminierten Polyestern und Epoxidharzen sind aus der GB-A-1,182,728 bekannt. Als Polyester sind auch Polycaprolactone beschrieben, die durch Umsetzung einer aliphatischen Dicarbonsäure mit einem grossen Ueberschuss ε-Caprolacton erhalten werden. Die gehärteten Produkte zeichnen sich durch eine gute Flexilität und hohe Schlagzähigkeit und Festigkeit aus.

Addukte aus Polycaprolactonen, die mit aliphatischen, cycloaliphatischen oder aromatischen Dicarbonsäuren verkappt sind, und aus cycloaliphatischen Epoxidharzen sind aus der JP-A-59-30,817 bekannt. Die gehärteten Produkte zeichnen sich durch gute Flexibilität und durch hohe Festigkeit aus. Sie lassen sich als elektrische Isolatormaterialien einsetzen.

Aus der GB-A-543,648 sind Polycaprolactone bekannt, die mit Trimellithsäure verkappt sind. Die Verbindungen lassen sich als Härter für Pulverlacke auf Epoxidbasis einsetzen. Bei diesen Gemischen handelt es sich also um Kombinationen von festen Epoxidharzen und festen Härtern die in Pulverform voneinander getrennt vorliegen.

In der US-A-4,086,294 werden wasserunlösliche, carboxyl-terminierte Addukte aus einem cycloaliphatischen Diepoxid, einem Anhydrid einer Polycarbonsäure und einem Polycaprolacton beschrieben. Diese Addukte lassen sich durch Umsetzung der Carboxylendgruppen mit tertiären Aminen in wasserlösliche, vernetzbare Verbindungen überführen, die als Beschichtungsmaterialien eingesetzt werden können. Die Vernetzung erfolgt thermisch oder in Gegenwart eines Vernetzungsmittels, beispielsweise eines Aminoplasts auf Harnstoff-Formaldehyd-Basis. Die Addukte besitzen praktisch keine freien Epoxidgruppen.

Aus der JP-A-61-44,915 sind Kombinationen von Epoxidharzen und Addukten von hydroxyl-terminierten Polycaprolactonen an Epoxidharze, beispielsweise Epoxidharze auf Basis von Bisphenol-A oder Bisphenol-F, bekannt. Die Herstellung der Addukte erfolgt unter relativ scharfen Bedingungen durch Umsetzung des Epoxidharzes mit ε-Caprolacton bei Temperaturen von 100-200°C in Gegenwart eines Katalysators. Die beschriebenen Gemische besitzen einen hohen Gehalt an primären Hydroxylgruppen, welche bei der Härtung mit dem Härter reagieren können.

Aus der EP-A-143,127 sind Addukte von Polycaprolactonpolyolen an Polyepoxide bekannt. Die Polycaprolactonkomponente wird bei der Adduktbildung im Ueberschuss eingesetzt und es resultiert ein Addukt mit einem niedrigen Epoxidgehalt. Bevorzugt werden cycloaliphatische Epoxidharze verwendet.

Es wurden jetzt Addukte von speziellen, carboxyl-terminierten Polyalkylenlactonen an ausgewählte Epoxidharze gefunden, die sich gut zu Pasten verarbeiten lassen und die auch in dicken Schichten gut durchhärtbar sind. Insbesondere in Kombination mit wärmeaktivierbaren, latenten Aminhärtern lassen sich Formulierungen mit einer guten Lagerstabilität und gleichzeitig hoher Reaktivität bei der Heisshärtung herstellen, so dass kurze Härtungszeiten erzielt werden können.

Die gehärteten Produkte zeichnen sich durch eine hervorragende Feuchtigkeits- und Wechselklimabeständigkeit aus und sind gleichzeitig hochflexibel. Ferner besitzen sie eine hohe thermische Stabilität, so dass in der Regel keine besonderen Massnahmen gegen ein Ueberheizen von Klebverbindungen getroffen werden müssen. Ausserdem sind Klebverbindungen aus besagten Addukten durchschweissbar.

Die vorliegende Erfindung betrifft Verbindungen der Formel I

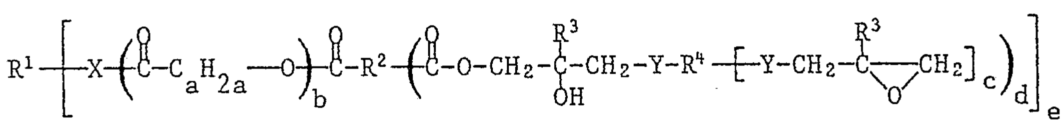

(I),

worin $R^1$ ein e-wertiger aliphatischer Rest nach dem Entfernen der funktionellen Gruppen ist, X -O- oder -NH- bedeutet, $R^2$ ein d + 1 wertiger carbocyclisch-aromatischer Rest ist, $R^3$ Wasserstoff oder Methyl bedeutet, $R^4$ ein aliphatischer, aromatischer oder araliphatischer c + 1-wertiger Rest ist, Y -O-, -S- oder -$NR^5$- bedeutet, $R^5$ Wasserstoff oder

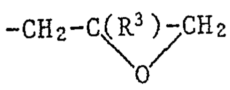

ist,
a eine ganze Zahl von 2 bis 15 bedeutet, b eine ganze Zahl von 1 bis 25 ist, c 1, 2 oder 3 ist, d 1, 2 oder 3 bedeutet und e 2, 3 oder 4 ist, mit der Massgabe, dass die Reste $R^2$ bis $R^5$ und Y sowie die Indizes a, b, c und d innerhalb eines Moleküls im Rahmen der gegebenen Definitionen unterschiedlich sein können.

Die Verbindungen der Formel I sind erhältlich durch Umsetzung eines aliphatischen Lactons der Formel II mit einer aromatischen Polycarbonsäure der Formel III oder mit einem ihrer esterbildenden Derivate, beispielsweise mit dem Anhydrid, dem Säurechlorid oder dem Ester, und anschliessender Adduktbildung des carboxyl-terminierten Produktes aus II und III mit einer aliphatischen, aromatischen oder araliphatischen Polyglycidylverbindung der Formel IV durch Erhitzen der Adduktbildungskomponenten, so dass ein noch härtbares Addukt entsteht

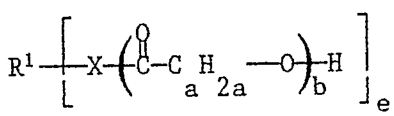 (II),

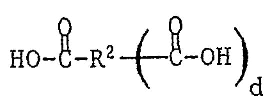 (III),

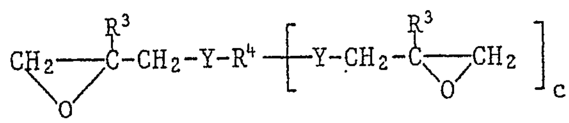 (IV);

dabei besitzen die Reste $R^1$ bis $R^4$, X und Y sowie die Indizes a bis e die weiter oben gegebene Bedeutung.

Verbindungen der Formel II sind an sich bekannt. Sie leiten sich ab von der Addition eines Lactons an ein aliphatisches Starterpolyol oder -polyamin. Beispiele für geeignete Lactone sind β-Propiolacton, Pivalolacton, γ-Butyrolacton, δ-Valerolacton, ε-Caprolacton, 7-Hydroxyheptansäurelacton, 8-Hydroxyoctansäurelacton, 9-Hydroxynonansäurelacton, 10-Hydroxydecansäurelacton und 15-Hydroxypentadecansäurelacton. Bevorzugte Verbindungen der Formel II sind Polycaprolactone.

Beispiele für aliphatische Starterpolyole $R^1$-$(OH)_e$ sind Ethylenglykol, 1,2- oder 1,3-Propylenglykol, 1,4-Butandiol, 1,5-Pentandiol, 1,6-Hexandiol, 1,4-Cyclohexandiol, 1,8-Octandiol, 1,10-Decandiol, Polyethylenglykole, wie Di- oder Triethylenglykol, Polypropylenglykole, wie Di- oder Tripropylenglykol, 2-Ethyl-1,3-hexandiol, 1,3-Bis-(hydroxyethyl)-benzol, Glycerin, 1,2,6-Hexantriol, Trimethylolpropan, Erythritol, Pentaerithrit, Neopentylglykol oder Triethanolamin.

Beispiele für aliphatische Starterpolymere $R^1$-$(NH_2)_e$ sind Ethylendiamin, 1,2- oder 1,3-Propylendiamin, 1,4-Diaminobutan, 1,6-Diaminohexan oder Diethylentriamin.

Der Rest $-C_aH_{2a}-$ kann geradkettig oder verzweigt sein. Bevorzugt sind geradkettige Reste.

Die Molekulargewichte geeigneter Polymerer der Formel II liegen im Bereich von 200 bis 6000 (Zahlenmittel), vorzugsweise im Bereich von 300 bis 3000, ganz besonders bevorzugt im Bereich von 1000 bis 2000. Die Herstellung dieser Verbindungen erfolgt nach an sich bekannten Verfahren. Für Polycaprolactonpolyole findet man ein Herstellungsverfahren in der EP-A-143,121.

Bevorzugt verwendet man als Polymere der Formel II lineare Polycaprolatcone mit Molekulargewichten von 500-2000. Solche Verbindungen sind unter der Bezeichnung CAPA® von der Firma Interox Chem. Ltd. erhältlich.

Beispiele für Verbindungen der Formel III sind ein- oder zweikernige carbocyclisch-aromatische Di-, Tri-oder Tetracarbonsäuren, wie Phthalsäure, Isophthalsäure, Terephthalsäure, Trimellithsäure, Pyromellithsäure, Benzophenontetracarbonsäure, Benzophenondicarbonsäure, Bis-(3,4-dicarboxyphenyl)-methan, Bis-(3,4-dicarboxyphenyl)-ether, Bis-(4-carboxyphenyl)-methan, Bis-(4-carboxyphenyl)-ether, 1,4-Dicarboxynaphthalin, 1,6-Dicarboxynaphthalin oder 1,4,6,8-Tetracarboxynaphthalin oder deren Anhydride.

Bevorzugt verwendet man die Dicarbonsäuren oder insbesondere deren Anhydride.

Beispiele für geeignete Polyglycidylverbindungen der Formel IV sind:

I) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung. Ether dieses Typs leiten sich beispielsweise ab von acyclischen Alkoholen, wie Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, sorbit, sowie von Polyepichlorhydrinen.

Sie leiten sich aber auch beispielsweise ab von cycloaliphatischen Alkoholen mit aromatischen Kernen wie N,N-Bis-(2-hydroxyethyl)-anilin oder p,p′-Bis-(2-hydroxyethylamino)-diphenylmethan.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 4,4′-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf niedermolekularen Novolaken aus zwei bis fünf Phenylkernen erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.

II) Poly-(N-glycidyl) Verbindungen die beispielsweise durch Dehydrochlorierung der Reaktionsprodukte von Epichlorhydrin mit Aminen, die mindestens zwei primäre oder sekundäre Aminosubstituenten enthalten, erhältlich sind. Bei diesen Aminen handelt es sich zum Beispiel um Bis-(4-aminophenyl)-methan, m-Xylylendiamin, Bis-(4-methylaminophenyl)-methan, Diethylentriamin, Triethylentetramin, Tetraaminbenzol oder Tetraaminobiphenyl.

III) Poly-(S-glycidyl) Verbindungen, die sich von Dithiolen, wie beispielsweise Ethan-1,2-dithiol oder Bis-(4-merkaptomethylphenyl)-ether ableiten.

Zur Herstellung der carboxyl-terminierten Polyalkylenlactone setzt man den hydroxyl-terminierten Polyester der Formel II mit einem Ueberschuss oder einer äquivalenten Menge der Carbonsäure der Formel III oder einem ihrer esterbildenden Derivate in an sich bekannter Weise um. Die Reaktion ist für trimellithsäure-terminierte Polycaprolactone in der GB-A-1,543,648 beschrieben.

Vorzugsweise setzt man die Verbindungen der Formeln II und III im molaren Verhältnis von 0,5:1 bis 1:1 um. Man kann natürlich auch grössere Ueberschüsse von Polycarbonsäure der Formel III einsetzen, doch ist darauf zu achten, dass bei der folgenden Adduktbildung mit dem Polyepoxid keine Gelierung erfolgt. Die Adduktbildung des carboxylterminierten Polyalkylenlactons mit der Polyglycidylverbindung erfolgt ebenfalls in an sich bekannter Weise. Dazu erhitzt man beispielsweise die beiden Ausgangsprodukte in Gegenwart eines Katalysators, so dass ein flüssiges bis wachsartiges Vorkondensat entsteht. Das Addukt ist noch schmelzbar und kann in einer Folgestufe noch gehärtet werden.

Beispiele für geeignete Katalysatoren sind Triarylphosphine, wie Triphenylphosphin, tertiäre Amine, quaternäre Ammonium- oder Phosphoniumsalze oder Chrom-Acetylacetonat.

Die Adduktbildung erfolgt in der Regel in Abwesenheit eines Lösungsmittels. Die Reaktion wird vorzugsweise unter Schutzgas, beispielsweise Stickstoff, durchgeführt.

Die Menge an Reaktanden wird zweckmässigerweise so gewählt, dass praktisch alle Carboxylendgruppen des Polylactons reagiert haben und dass pro Polyepoxidverbindung im Mittel eine 1,2-Epoxidgruppe umgesetzt ist. Dazu kann man beispielsweise die Mengen des Adduktes aus II and III und der Epoxidverbindung IV so wählen, dass auf ein Aequivalent Carboxylendgruppen etwa 1,5-10 Aequivalente Epoxidgruppen entfallen. Die Reaktionstemperaturen bei der Adduktbildung betragen in der Regel 80-200° C, vorzugsweise 80-150° C.

Der Rest X ist vorzugsweise -O-.

Der Rest $R^1$ leitet sich vorzugsweise von einem aliphatischen Diol ab und der Rest $-C_aH_{2a}-$ ist vorzugsweise geradkettig.

Der Rest $R^2$ ist vorzugsweise ein Rest einer carbocyclisch-aromatischen Dicarbonsäure, besonders bevorzugt ein Rest der Formel V

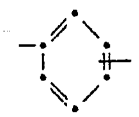

(V),

und ganz besonders bevorzugt 1,2-Phenylen.
$R^3$ ist vorzugsweise Wasserstoff.
Y ist vorzugsweise -O-.
$R^4$ ist vorzugsweise ein Rest der Formel VI oder VII

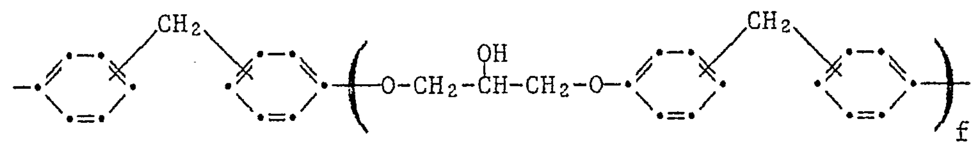

(VI),

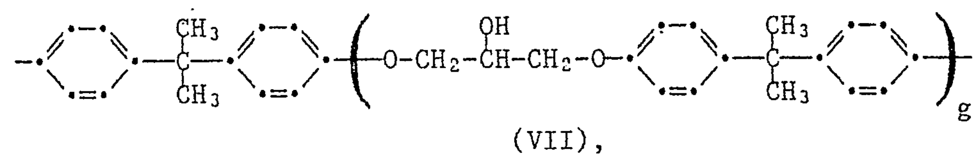

(VII),

worin f und g 0 oder 1 bis 4 bedeuten.

Ganz besonders bevorzugt ist $R^4$ ein Rest der Formel VI, worin f 0 oder 1 ist.

Der Index a ist vorzugsweise 5; b ist vorzugsweise 1 bis 12, ganz besonders 5 bis 10; c ist vorzugsweise 1; d ist vorzugsweise 1; und e ist vorzugsweise 2 oder 3, ganz besonders bevorzugt 2.

Ganz besonders bevorzugt sind Verbindungen der Formel I, worin X -O-ist, $-C_aH_{2a}-$ geradkettig ist, $R^2$ 1,2-Phenylen ist, $R^3$ Wasserstoff bedeutet, $R^4$ ein Rest der Formeln VI oder VII ist, worin f oder g 0 bedeuten, Y -O- ist, a 5 bedeutet, b eine ganze Zahl von 1 bis 12 ist, c und d 1 sind und e 2 bedeutet.

Die Addukte der Formel I können als solche gehärtet werden oder sie können in Kombination mit weiteren Epoxidharzen und latenten Härtern verarbeitet werden.

Die Erfindung betrifft daher auch Gemische enthaltend a) ein Addukt der Formel I, wie oben definiert, und b) einen wärmeaktivierbaren, latenten Härter für Epoxidharze.

Ferner betrifft die Verbindung härtbare Gemische enthaltend Komponenten a) und b), wie oben definiert, und zusätzlich c) eine Epoxidverbindung mit wenigstens zwei 1,2-Epoxidgruppen pro Molekül.

Als Epoxidkomponente c) können die weiter oben als Bildungskomponenten der Addukte der Formel I beschriebenen Epoxidharze eingesetzt werden. Zusätzlich können auch folgende Epoxidharzklassen verwendet werden:

IV) Polyglycidyl- und Poly-(β-methylglycidyl)-ester erhältlich durch Umsetzung einer Verbindung mit mindestens zwei Carboxylgruppen im Molekül und Epichlorhydrin bzw. Glyzerindichlorhydrin bzw. β-Methylepichlorhydrin. Die Umsetzung erfolgt zweckmässig in der Gegenwart von Basen. Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielesweise Phthalsäure, Isophthalsäure oder Terephthalsäure.

V) Heterocyclische Epoxidharze, wie z.B. Triglycidylisocyanurat, N,N′-Diglycidylderivate von Cycloalkylenharnstoffen, wie Ethylenharnstoff oder 1,3-Propylenharnstoff, und N,N′-Diglycidylderivate von Hydantoinen, wie von 5,5-Dimethylhydantoin.

VI) Cycloaliphatische Epoxidharze, wie z.B. Bis-(2,3-epoxicyclopentyl)-ether, 2,3-Epoxicyclopentylglycidylether, 1,2-Bis-(2,3-epoxicyclopentyloxy)-ethan, 3,4-Epoxicyclohexylmethyl-3′,4′-epoxicyclohexancarboxylat oder Glycidylether von cycloaliphatischen Alkoholen, wie von 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en.

Es lassen sich aber auch Epoxidharze verwenden, bei denen die 1,2-Epoxidgruppen an unterschiedliche

Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glydidyloxypropyl)-5,5-dimethylhydantoin oder 2-Glycidyloxy-1,3-bis-(5,5-dimethyl-1-glycidylhydantoin-3-yl)-propan.

Falls gewünscht, kann eine Mischung von Epoxidharzen in den erfindungsgemässen Zusammensetzungen verwendet werden.

Besonders bevorzugt als Epoxidharze c) werden Polyglycidylether von Bisphenolen, wie beispielsweise von 2,2-Bis-(4-hydroxyphenyl)-propan oder Bis-(4-hydroxyphenyl)-methan, oder von den oben erwähnten aliphatischen Diolen, insbesondere von Butan-1,4-diol.

Als wärmeaktivierbare, latente Härter b) eignen sich beispielsweise die folgenden Verbindungsklassen: Primäre oder sekundäre aromatische Amine, beispielsweise Phenylendiamine, substituierte Phenylendiamine, wie beispielsweise 2,4- oder 2,6-Diethyl-3,5-diaminotoluol, Bis-(aminophenyl)-methan (z.B. das 4,4′-Derivat) oder Bis-(aminophenyl)-sulfon (z.B. das 4,4′-Derivat), sowie Bis-(aminophenyl)-keton (z.B. das 4,4′-Derivat); Amidine, wie Dicyandiamid oder 1-Cyan-3-(niedrigalkyl)-guanidine, wie z.B. die 3-Methyl-, 3,3-Dimethyl- oder 3,3-Diethylderivate; Komplexe von Bortrihalogenid, insbesondere Bortrifluorid oder Bortrichlorid, mit einem tertiären aliphatischen, cycloaliphatischen oder heterocyclischen Amin, insbesondere Komplexe mit Trimethylamin oder Octyldimethylamin; oder Anhydriden von mehrbasischen Carbonsäuren, wie beispielsweise Phthalsäureanhydrid, Tetrahydrophthalsäureanhydrid oder Hexahydrophthalsäureanhydrid.

Besonders bevorzugt werden härtbare Gemische enthaltend Komponente a) und gegebenenfalls Komponente c), wie oben definiert, und als Komponente b) ein aromatisches Amin mit primären und/oder sekundären Aminogruppen oder ein Amidin, insbesondere Dicyandiamid.

Die härtbaren Gemische aus Komponenten a), b) und gegebenenfalls c) können darüber hinaus noch Härtungsbeschleuniger d) enthalten.

Beispiele für geeignete Härtungsbeschleuniger d) sind tertiäre Amine, deren Salze oder quaternäre Ammoniumverbindungen, z.B. Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat oder Tetramethylammoniumchlorid; Imidazole bzw. substituierte Imidazole, wie beispielsweise das 2-Methylimidazol, 2-Phenylimidazol, 1-Benzyl-2-methylimidazol oder das 1-Cyanethyl-2-methylimidazol; Amide einschliesslich die substituierten Harnstoffe, insbesondere die Harnstoffe mit aromatischen Resten, wie beispielsweise N-(4-Chlorphenyl)-N,N′-dimethylharnstoff, N-(2-Hydroxyphenyl)-N′,N′-dimethylharnstoff, N-(3-Chlor-4-methylphenyl)-N′,N′-dimethylharnstoff oder 2,4-Bis-(N,N-dimethylureido)-toluol.

Die erfindungsgemässen härtbaren Gemische können ferner übliche Zusatzstoffe e), wie geeignete Weichmacher, beispielsweise Dibutylphthalat, Dioctylphthalat oder Trikresylphthalat, oder auch reaktive Verdünner, wie Phenyl- oder Kresylglycidylether, Butandioldiglycidylether oder Hexahydrophthalsäurediglycidylether, enthalten.

Schliesslich können den härtbaren Gemischen als Zusatzstoffe e) vor der Härtung in irgendeiner Phase Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben, Titandioxid u.a. zugegeben werden. Man kann den härtbaren Gemischen ferner auch andere übliche Zusätze e), z.B. Flammschutzmittel, wie Antimontrioxid, Thioxotropiemittel, Verlaufmittel ("flow control agents"), wie Silicone, Wachse oder Stearate (welche zum Teil auch als Formtrennmittel Anwendung finden), zusetzen.

Der Anteil an Härter b) bzw. am Härtungsbeschleuniger d) ist abhängig vom Härtertyp und wird vom Fachmann in an sich bekannter Weise ausgewählt. Im Falle des bevorzugten Dicyandiamids setzt man pro Mol Epoxidgruppen in der Regel 0,1-0,5 Mol des Härters ein.

Der Anteil an Zusatzstoffen e) beträgt üblicherweise 0-200 Gew.%, bezogen auf die Menge an Komponenten a) und gegebenenfalls c).

Die Herstellung der erfindungsgemässen härtbaren Mischungen kann in üblicher Weise mit Hilfe bekannter Mischaggregate (Rührer, Kneter, Walzen etc.) erfolgen.

Die erfindungsgemässen Mischungen aus a) und b) und gegebenenfalls d) und weiteren Zusatzstoffen e) oder aus a) und b) und gegebenenfalls c) und d) und weiteren Zusatzstoffen e) sind in der Regel flüssig oder bevorzugt pastenförmig und werden insbesondere als Klebstoffe eingesetzt. Die Erfindung betrifft als auch die Verwendung dieser Gemische als Klebstoffe oder Dichtmassen. Ferner betrifft die Erfindung die Verwendung der Addukte der Formel I als Flexibilisatoren für Epoxidharze.

Die Härtung der erfindungsgemässen Mischungen erfolgt zweckmässig im Temperaturintervall von 50-250°C, bevorzugt von 100-240°C.

Die Verklebung wird in an sich bekannter Weise vorgenommen, indem man die flüssige oder pastenförmige Klebstofformulierung mittels einer geeigneten Vorrichtung auf ein Substrat, beispielsweise öligem Stahl, aufbringt, die zu verklebenden Oberflächen kontaktiert und anschliessend thermisch härtet.

Die erfindungsgemässen Gemische eignen sich aber auch als Fugenfüller oder zur Herstellung von Oberflächenbeschichtungen. Sie können in jeweils dem speziellen Anwendungszweck angepasster Formulierung in ungefülltem oder gefülltem Zustand eingesetzt werden.

Die folgenden Beispiele erläutern die Erfindung:

Herstellungsbeispiele

Beispiel 1:

800 g Polycaprolacton (CAPA® 222 der Fa. Interox Chem. Ltd.; Molekulargewicht 2000; OH-Zahl 56) werden bei 60°C im Ofen geschmolzen und in einen Reaktionskolben gegeben. Dazu gibt man 118,4 g Phthalsäureanhydrid und erhitzt unter Rühren auf 70°C. Dann werden 0,5 g trockenes Tetramethylammoniumchlorid hinzugefügt. Die Reaktionstemperatur wird auf 140°C gesteigert und 5 Stunden aufrechterhalten. Das Phthalsäureanhydrid löst sich ab 130°C völlig im Reaktionsgemisch.
Nach dem Abkühlen erstarrt das Produkt zu einem wachsartigen Feststoff. Die Säurezahl des Produktes beträgt 0,80 Aequ./kg.
100 g dieses Produktes und 100 g Diglycidylether auf Bisphenol-F-Basis (Epoxidgehalt: 6,2 Aequ./kg) werden zusammen mit 0,2 g Triphenylphosphin unter Stickstoff zwei Stunden lang auf 150°C erhitzt.
Es resultiert ein Addukt mit dem Epoxidgehalt von 2,54 Aequ./kg. (Theorie: 2,71 Aequ./kg).

Beispiel 2:

Man verfährt wie in Beispiel 1 und setzt 600 g Polycaprolacton (CAPA® 212 der Fa. Interox Chem. Ltd.; Molekulargewicht 1000; OH-Zahl 113,3) mit 179,64 g Phthalsäureanhydrid und 0,45 g Tetramethylammoniumchlorid um. Die Säurezahl des Produktes beträgt 1,32 Aequ./kg. In Analogie zu Beispiel 1 setzt man 100 g dieses Produktes mit 100 g Diglycidylether auf Bisphenol-F-Basis (Epoxidgehalt: 6,2 Aequ./kg) und 0,2 g Triphenylphosphin um. Es resultiert ein Addukt mit einem Epoxidgehalt von 2,18 Aequ./kg (Theorie: 2,44 Aequ./kg).

Beispiel 3:

Man verfährt wie in Beispiel 1 und setzt 600 g Polycaprolacton (CAPA® 205 der Fa. Interox Chem. Ltd.; Molekulargewicht 830; OH-Zahl 135) mit 214 g Phthalsäureanhydrid und 0,5 g Tetramethylammoniumchlorid um. Die Säurezahl des Produktes beträgt 1,7 Aequ./kg.
In Analogie zu Beispiel 1 setzt man 100 g dieses Produktes mit 100 g Diglycidylether auf Bisphenol-F-Basis (Epoxidgehalt: 6,2 Aequ./kg) und 0,2 g Triphenylphosphin um. Es resultiert ein Addukt mit einem Epoxidgehalt von 2,01 Aequ./kg (Theorie: 2,25 Aequ./kg).

Anwendungsbeispiele

Folgende Klebstofformulierungen werden hergestellt und getestet:

Beispiel I:
Addukt gemäss Beispiel 2: 25,0 Teile
Dicyandiamid 1,5 Teile
Chlortoluron 0,1 Teile
Thixotropiemittel 1,0 Teile
Ergebnis nach der Härtung im Dornbiegetest*): Keine Risse.

Beispiel II:
Addukt gemäss Beispiel 3: 25,0 Teile
Dicyandiamid 0,7 Teile
Chlortoluron 0,1 Teile
Thixotropiemittel 0,5 Teile
Ergebnis nach der Härtung im Dornbiegetest*): Keine Risse.

Beispiel III:
Addukt gemäss Beispiel 2: 25,00 Teile
Dicyandiamid 0,76 Teile
Chlortoluron 0,10 Teile
Wollastonit 7,50 Teile
Talk 3,75 Teile
Thixotropiemittel 0,90 Teile
Härtung: 30 Min. bei 180°C, Substrat: Stahlblech Zugscherfestigkeit: 4-5 MPa
Zugscherfestigkeit nach 7 d Schwitzwassertest**): 3-3,5 MPa

*) Mittels einer Schablone wird eine Klebstoffschicht (L: 7 cm, B: 1 cm, H: 2 mm) auf ein 1 mm dickes Stahlblech aufgetragen. Die Härtung erfolgt dann während 30 min bei 180°C. Danach wird die Probe 24 h bei Raumtemperatur gelagert und dann über einem Dorn mit 80 mm Durchmesser gebogen. Der Dorn besitzt dabei die gleiche Temperatur wie die Probe.

**) nach DIN 50017

## Patentansprüche

1. Verbindungen der Formel I

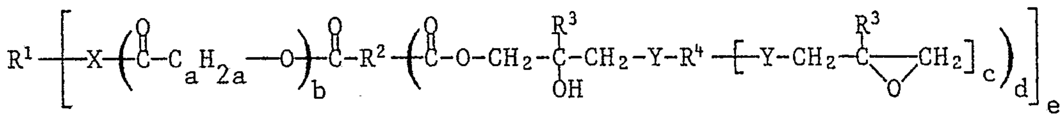

(I),

worin $R^1$ ein e-wertiger aliphatischer Rest nach dem Entfernen der funktionellen Gruppen ist, X -O- oder -NH- bedeutet, $R^2$ ein d+1 wertiger carbocyclisch-aromatischer Rest ist, $R^3$ Wasserstoff oder Methyl bedeutet, $R^4$ ein aliphatischer, aromatischer oder araliphatischer c+1-wertiger Rest ist, Y -O-, -S- oder -$NR^5$-bedeutet, $R^5$ Wasserstoff oder

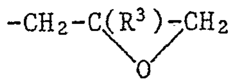

ist,
a eine ganze Zahl von 2 bis 15 bedeutet, b eine ganze Zahl von 1 bis 25 ist, c 1, 2 oder 3 ist, d 1, 2 oder 3 bedeutet und e 2, 3 oder 4 ist, mit der Massgabe, dass die Reste $R^2$ bis $R^5$ und Y sowie die Indizes a, b, c und d innerhalb eines Moleküls im Rahmen der gegebenen Definitionen unterschiedlich sein können.

2. Verbindungen der Formel I gemäss Anspruch 1, worin X -O- ist.

3. Verbindungen der Formel I gemäss Anspruch 1, worin der Rest $R^1$ sich von einem aliphatischen Diol ableitet und der Rest -$C_aH_{2a}$-geradkettig ist.

4. Verbindungen der Formel I gemäss Anspruch 1, worin $R^2$ der Rest einer carbocyclisch-aromatischen Dicarbonsäure ist.

5. Verbindungen der Formel I gemäss Anspruch 1, worin $R^2$ ein Rest der Formel V ist

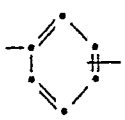

(V) .

6. Verbindungen der Formel I gemäss Anspruch 1, worin $R^3$ Wasserstoff ist.

7. Verbindungen der Formel I gemäss Anspruch 1, worin Y -O- ist.

8. Verbindungen der Formel I gemäss Anspruch 1, worin $R^4$ ein Rest der Formel VI oder VII ist

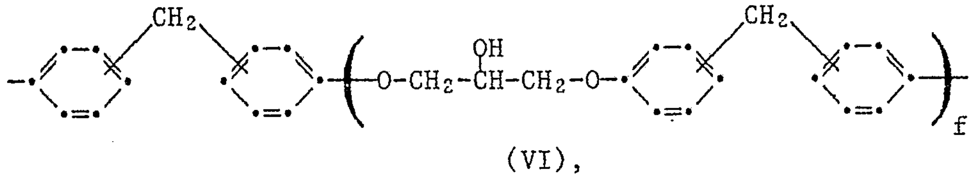

(VI),

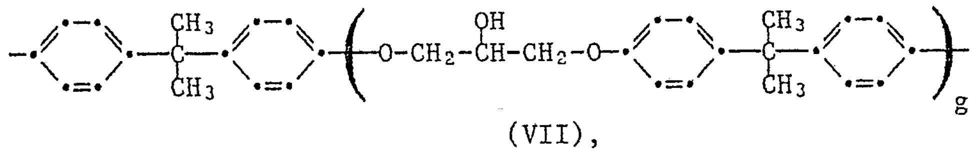

(VII),

worin f und g 0 oder 1 bis 4 bedeuten.

9. Verbindungen der Formel I gemäss Anspruch 1, worin a 5, b 1 bis 12, c und d je 1 und e 2 oder 3 sind.

10. Verbindungen der Formel I gemäss Anspruch 1, worin X -O- ist, $-C_aH_{2a}-$ geradkettig ist, $R^2$ 1,2-Phenylen ist, $R^3$ Wasserstoff bedeutet, $R^4$ ein Rest der Formeln VI oder VII gemäss Anspruch 9 ist, worin f oder g 0 bedeuten, Y -O- ist, a 5 bedeutet, b eine ganze Zahl von 1 bis 12 ist, c und d 1 sind und e 2 bedeutet.

11. Verfahren zur Herstellung von Verbindungen der Formel I gemäss Anspruch 1, umfassend die Umsetzung eines aliphatischen Lactons der Formel II mit einer aromatischen Polycarbonsäure der Formel III oder mit einem ihrer esterbildenden Derivate, und anschliessender Adduktbildung des carboxyl-terminierten Produktes aus II und III mit einer aliphatischen, aromatischen oder araliphatischen Polyglycidylverbindung der Formel IV durch Erhitzen der Adduktbildungskomponenten, so dass ein noch härtbares Addukt entsteht

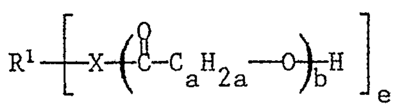

(II),

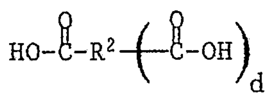

(III),

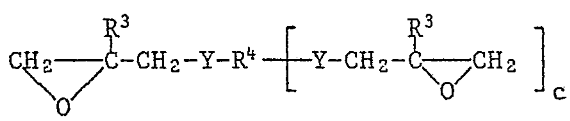

(IV);

worin die Reste $R^1$ bis $R^4$, X und Y sowie die Indizes a bis e die weiter oben definierte Bedeutung besitzen.

12. Gemische enthaltend a) ein Addukt der Formel I gemäss Anspruch 1, b) einen wärmeaktivierbaren, latenten Härter für Epoxidharze und gegebenenfalls c) eine Epoxidverbindung mit wenigstens zwei 1,2-Epoxidgruppen pro Molekül.

13. Gemische enthaltend Komponente a) und gegebenefalls Komponente c) gemäss Anspruch 12 und als Komponente b) ein aromatisches Amin mit primären und/oder sekundären Aminogruppen oder ein Amidin.

14. Verwendung der Addukte der Formel I gemäss Anspruch 1 als Flexibilisatoren für Epoxidharze.

15. Verwendung der härtbaren Gemische gemäss Anspruch 12 als Klebstoffe oder Dichtmassen.

**Patentansprüche für den folgenden Vertragsstaat: ES**

1. Gemische enthaltend a) Verbindungen der Formel I

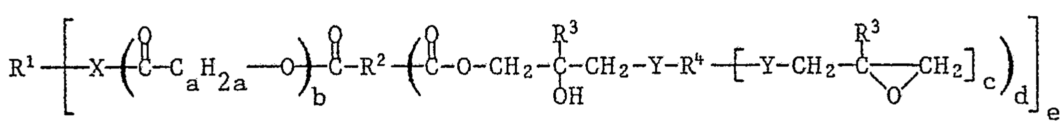

(I),

worin $R^1$ ein e-wertiger aliphatischer Rest nach dem Entfernen der funktionellen Gruppen ist, X -O- oder -NH- bedeutet, $R^2$ ein d+1 wertiger carbocyclisch-aromatischer Rest ist, $R^3$ Wasserstoff oder Methyl bedeutet, $R^4$ ein aliphatischer, aromatischer oder araliphatischer c+1-wertiger Rest ist, Y -O-, -S- oder -$NR^5$-bedeutet, $R^5$ Wasserstoff oder

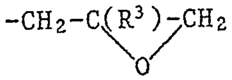

ist,
a eine ganze Zahl von 2 bis 15 bedeutet, b eine ganze Zahl von 1 bis 25 ist, c 1, 2 oder 3 ist, d 1, 2 oder 3 bedeutet und 2, 3 oder 4 ist, mit der Massgabe, dass die Reste $R^2$ bis $R^5$ und Y sowie die Indizes a, b, c und d innerhalb eines Moleküls im Rahmen der gegebenen Definitionen unterschiedlich sein können, b) einen wärmeaktivierbaren, latenten Härter für Epoxidharze und gegebenfalls c) eine Epoxidverbindung mit wenigstens zwei 1,2-Epoxidgruppen pro Molekül.

2. Gemische gemäss Anspruch 1, worin X -O- ist.

3. Gemische gemäss Anspruch 1, worin der Rest $R^1$ sich von einem aliphatischen Diol ableitet und der Rest -$C_aH_{2a}$-geradkettig ist.

4. Gemische gemäss Anspruch 1, worin $R^2$ der Rest einer carbocyclischaromatischen Dicarbonsäure ist.

5. Gemische gemäss Anspruch 1, worin $R^2$ ein Rest der Formel V ist

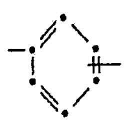
(V) .

6. Gemische gemäss Anspruch 1, worin $R^3$ Wasserstoff ist.

7. Gemische gemäss Anspruch 1, worin Y -O- ist.

8. Gemische gemäss Anspruch 1, worin $R^4$ ein Rest der Formel VI oder VII ist

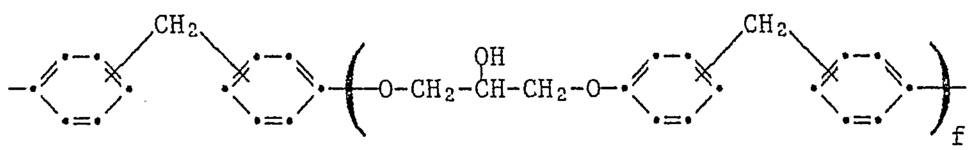
(VI),

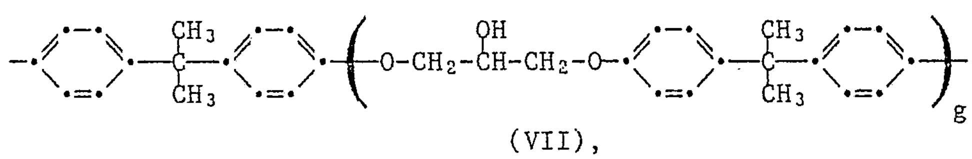
(VII),

worin f und g 0 oder 1 bis 4 bedeuten.

9. Gemische gemäss Anspruch 1, worin a 5, b 1 bis 12, c und d je 1 und e 2 oder 3 sind.

10. Gemische gemäss Anspruch 1, worin X -O- ist, -$C_aH_{2a}$- geradkettig ist, $R^2$ 1,2-Phenylen ist, $R^3$ Wasserstoff bedeutet, $R^4$ ein Rest der Formeln VI oder VII gemäss Anspruch 9 ist, worin f oder g 0 bedeuten, Y -O- ist, a 5 bedeutet, b eine ganze Zahl von 1 bis 12 ist, c und d 1 sind und e 2 bedeutet.

11. Gemische gemäss Anspruch 1, enthaltend als Komponente b) ein aromatisches Amin mit primären und/oder sekundären Aminogruppen oder ein Amidin.

12. Verfahren zur Herstellung von Verbindungen der Formel I gemäss Anspruch 1, umfassend die Umsetzung eines aliphatischen Lactons der Formel II mit einer aromatischen Polycarbonsäure der Formel III oder mit einem ihrer esterbildenden Derivate, und anschliessender Adduktbildung des carboxyl-terminierten Produktes aus II und III mit einer aliphatischen, aromatischen oder araliphatischen Polyglycidylverbindung der Formel IV durch Erhitzen der Adduktbildungskomponenten, so dass ein noch härtbares Addukt entsteht

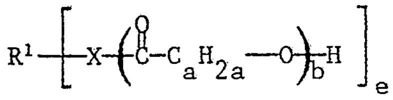

(II),

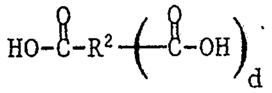

(III),

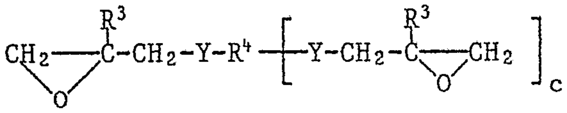

(IV);

worin die Reste $R^1$ bis $R^4$, X und Y sowie die Indizes a bis e die weiter oben definierte Bedeutung besitzen.

13. Verwendung der Addukte der Formel I gemäss Anspruch 1 als Flexibilisatoren für Epoxidharze.

14. Verwendung der härtbaren Gemische gemäss Anspruch 1 als Klebstoffe oder Dichtmassen.